# EUROPEAN PATENT SPECIFICATION

(11) **EP 3 850 279 B1**
(45) Date of publication and mention of the grant of the patent: **03.04.2024**
(21) Application number: 19762567.6
(22) Date of filing: 20.08.2019
(51) Int. Cl.: F25B 21/02, F25D 31/00, F25D 15/00, A47J 41/00

(54) **CHILLED BEVERAGE CONTAINER AND CHILLED BEVERAGE DISPENSING SYSTEMS AND METHODS**
BEHÄLTER FÜR GEKÜHLTE GETRÄNKE UND SYSTEME UND VERFAHREN ZUR AUSGABE GEKÜHLTER GETRÄNKE
RÉCIPIENT DE BOISSON GLACÉE ET SYSTÈMES ET PROCÉDÉS DE DISTRIBUTION DE BOISSON GLACÉE

(30) Priority: 10.09.2018 US 201862729290 P; 02.11.2018 US 201862754743 P
(43) Date of publication of application: 21.07.2021
(73) Proprietor: Ember Technologies, Inc., Westlake Village, CA 91361 (US)
(72) Inventor: ALEXANDER, Clayton, Westlake Village, California 91361 (US); TIMPERI, Mikko, Juhani, Westlake Village, California 91361 (US); LEITH, Daren, John, Westlake Village, California 91361 (US); WAKEHAM, Christopher, Thomas, Westlake Village, California 91361 (US); EMMERT, Jacob, William, Westlake Village, California 91361 (US)
(74) Representative: Dehns
(86) International application number: PCT/US2019/047211
(87) International publication number: WO 2020/055553

(56) References cited:
- WO-A1-2017/195461
- WO-A1-2017/197026
- WO-A1-2019/152219
- CN-U- 207 299 604
- DE-B3-102015 106 882
- US-A1- 2016 339 822
- US-A1- 2017 042 373
- US-B1- 9 995 529

## Description

### BACKGROUND OF THE INVENTION

### Field of the Invention

The invention is directed to a container (e.g., cup, mug, tumbler, liquid container), and more particularly to a container (e.g., drinkware container such as cup, mug, tumbler, sleeve, cover, carafe) that maintains a liquid disposed in the container or in a separate vessel housed in the container in a cooled (e.g., chilled) state and systems and methods for delivering a beverage into the container.

### Description of the Related Art

Reusable drinkware containers (e.g., cups, mugs, travel mugs, water bottles, liquid containers) for holding liquids (e.g., beverages) therein are common and are sometimes made of plastic or metal materials. However, one common drawback of existing drinkware containers is their inability to maintain the liquid in a cooled or heated state for a prolonged period of time.

The present invention is characterised over US 9995529 which discloses a temperature-regulating containment system for actively heating or cooling a liquid that comprises a container having a chamber adjustable between an unfilled condition and a filled condition, and a cooling element disposed beneath the chamber, wherein when a temperature of a liquid in the container is above a desired liquid temperature, the chamber adjusts to the filled condition and the cooling element removes heat from the liquid.

### SUMMARY

Accordingly, there is a need for improved containers (e.g., drinkware containers such as cups, mugs, carafes; covers, sleeves, etc.) that can maintain the contents (e.g., liquid, iced coffee, iced tea, milk, breast milk, infant formula, beer, wine, spirits, water, carbonated water, soft drinks, other beverages) in a cooled state over an extended period of time (e.g., 6 hours or less, 4 hours or less, 2 hours or less, about 1 hour, about 30 minutes, etc.).

In accordance with one aspect of the disclosure, a drinkware container system is provided as claimed in claim 1.

The container system comprises a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid, the bottom wall spaced below the base wall. The container system also comprises a cold-side heat sink in the cavity and in thermal contact with one or both of the inner wall and the base wall. The container system comprises a phase change material disposed in the cavity and in thermal communication with at least a portion of the chamber and with the cold side heat sink, the phase change material spaced apart from the outer wall. The cavity can optionally be filled with an insulation material between the cold side heat sink and the outer wall. Optionally, the container body can have one or more magnets that can removably couple the container body with a cooling unit.

The drinkware system includes a drinkware container having a container body that extends between a proximal end and a bottom wall at a distal end. The container body has an outer wall and an inner wall spaced inward of the outer wall to define a cavity therebetween, the inner wall extending between an opening at a proximal end of the container body and a base wall. The inner wall and base wall define a chamber configured to receive and hold a liquid, the bottom wall spaced below the base wall and a heat sink disposed in the cavity in thermal communication with one or both of the inner wall and the base wall. The drinkware system also includes a cooling unit configured to removably receive the drinkware container thereon and operable to cool one or both of the heat sink in the drinkware container and the inner wall and/or base wall of the drinkware container. The cooling unit comprises a first heat sink configured to contact the bottom wall of the drinkware container when the drinkware container is placed on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container.

The drinkware system may be used with a cooling unit configured to receive a beverage from a beverage dispensing unit at a first temperature and to cool the beverage to a second temperature below the first temperature before dispensing the beverage to a drinkware container. The cooling unit comprises a first heat sink configured to receive the dispensed beverage at a proximal end of the first heat sink and extending between the proximal end and distal end, the first heat sink having an inclined surface that inclines upward from the distal end to the proximal end. The cooling unit comprises one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink cooling the beverage as it flows along a path between the proximal end and the distal end.

In the invention, a drinkware system includes a drinkware container having a container body that extends between a proximal end and a bottom wall at a distal end, the container body having an outer wall and an inner wall spaced inward of the outer wall to define a cavity therebetween. The inner wall extends between an opening at a proximal end of the container body and a base wall, the inner wall and base wall defining a chamber configured to receive and hold a liquid, the bottom wall spaced below the base wall and a PCM disposed in the cavity in thermal communication with one or both of the inner wall and the base wall. The drinkware system includes a cooling unit configured to removably receive the drinkware container in an upside-down orientation thereon and operable to cool one or both of the PCM in the drinkware container and the inner wall and/or base wall of the drinkware container. The cooling unit comprises a first heat sink configured to contact one or both of the base wall and the inner wall of the drinkware container when the drinkware container is placed upside down on the cooling unit, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from the first heat sink and transfer it to the second heat sink to cool the first heat sink, the cooled first heat sink drawing heat from the drinkware container to cool the drinkware container and to charge the PCM, allowing the drinkware container to maintain a liquid later dispensed therein in a cooled state.

In accordance with an embodiment of the disclosure, a heating or cooling system for the container comprises a thermal unit having a body that defines a platform and one or more docking stations on the platform, the body having one or more openings in an outer surface of the body through which air is configured to pass. The thermal unit comprises a first heat sink configured to be in thermal communication with one or more surfaces of the body and/or one or more openings in the one or more docking stations, one or more thermoelectric modules in thermal communication with the first heat sink, and a second heat sink in thermal communication with the one or more thermoelectric modules so that the one or more thermoelectric modules are interposed between the first heat sink and the second heat sink. The one or more thermoelectric modules are operable to draw heat from one of the first and second heat sink and transfer it to the other of the first and second heat sink to thereby cool or heat the first heat sink. One or more fans in fluid communication with the first heat sink and configured to generate a flow of air past the first heat sink and through the one or more openings in the one or more docking stations, the flow of air being cooled or heated as it flows past the first heat sink and through the one or more openings in the one or more docking stations.

### BRIEF DESCRIPTION OF THE DRAWINGS

Figure 1A is a schematic view of a drinkware container and cooling unit for cooling the drinkware container.
Figure 1B is a schematic view of the drinkware container and cooling unit for cooling the drinkware container, the drinkware container disposed below a beverage dispensing unit.
Figure 2 is a schematic view of a drinkware container and cooling unit for cooling the drinkware container.
Figure 3 is a schematic view of a drinkware container and an example of a cooling unit outside the scope of the present invention for cooling the drinkware container.
Figure 4 is a schematic view of a drinkware container and an example of a cooling unit outside the scope of the present invention for cooling the drinkware container.
Figure 5 is a schematic view of a cooling unit disposed below a beverage dispensing unit, the cooling unit operable to cool the beverage and deliver it to a drinkware container.
Figure 6 is a schematic view of a cooling unit disposed below a beverage dispensing unit, the cooling unit operable to cool the beverage and deliver it to a drinkware container.
Figure 7 is a schematic view of a cooling unit disposed below a beverage dispensing unit, the cooling unit operable to cool the beverage and deliver it to a drinkware container.
Figure 8A is a schematic view of a drinkware container and cooling unit for cooling the drinkware container.
Figure 8B is a schematic of a multi-unit cooling rack for cooling multiple drinkware containers.
Figure 9 is a schematic view of a cooling unit disposed below a beverage dispensing unit, the cooling unit operable to cool the beverage and deliver it to a drinkware container, and a multi-unit cooling rack for cooling multiple drinkware containers prior to dispensing the beverage.
Figure 10 is a schematic view of a cooling or heating unit.
Figure 11 is a schematic cross-sectional view of a cooling or heating unit.

### DETAILED DESCRIPTION

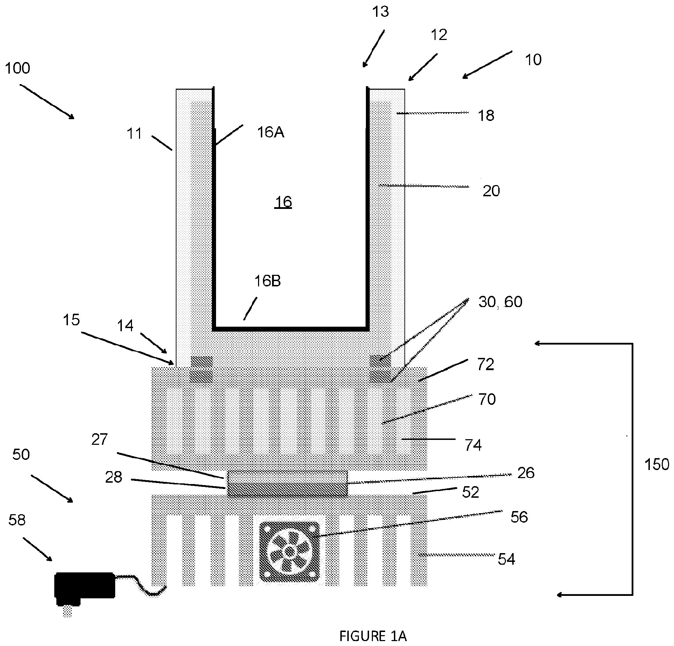

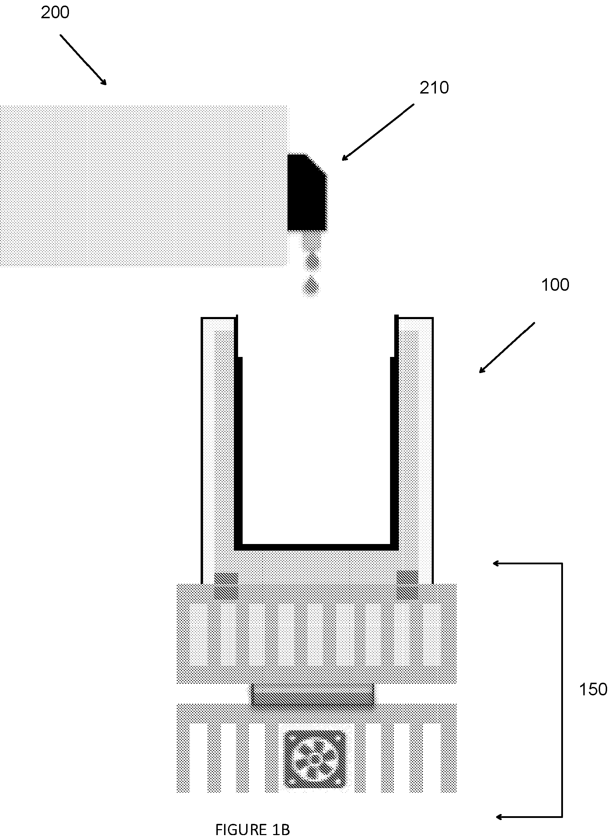

Figures 1A-1B show a schematic cross-sectional view of a drinkware container 100. Optionally, the drinkware container 100 is cylindrical and symmetrical about a longitudinal axis (e.g., a central longitudinal axis of the container 100), and one of ordinary skill in the art will recognize that the features shown in cross-section in FIGS. 1A-1B are defined by rotating them about the axis to define the feature of the cylindrical container.

The drinkware container 100 is a cooled drinkware container operable to cool the contents of the container and/or maintain the contents of the container in a cooled or chilled state for a prolonged period of time (e.g., 1 hour, 2 hours, 3 hours, 4 hours, 5 hours, etc.). The drinkware container 100 has a body 10 with an outer wall 11 that extends between a proximal end 12 that has an opening 13 and a distal end 14 having a base 15. Optionally, the opening 13 can get selectively closed by a lid (not shown) removably attached to the proximal end 12. The body 10 has an inner wall 16A and a base wall 16B that defines an open chamber 16 that can receive and hold a liquid (e.g., water, tea, coffee, milk, etc.) therein. Optionally, the body 10 can be made of metal (e.g., stainless steel). In another implementation, the body 10 can be made of plastic. In another implementation, the inner wall 16A and base wall 16B can be made of metal and the outer wall 11 can be made of a plastic or a ceramic material.

The body 10 has a cavity 18 (e.g., annular cavity or chamber) between the inner wall 16A and the outer wall 11. Optionally, the cavity 18 can be under vacuum. In another implementation, the cavity 18 can be filled with air but not be under vacuum. In another implementation the cavity 18 can be filled with an insulation material (e.g., foam).

A heat sink (e.g., cold-side heat sink) 20 is disposed in the cavity 18 and in thermal communication with the inner wall 16A and/or base well 16B. The heat sink 20 can be in direct contact with the inner wall 16A and/or base wall 16B to thermally communicate with the chamber 16. The heat sink 20 can optionally have a cylindrical shape. In one implementation, the heat sink 20 is made of metal. As further described below, the heat sink 20 effects heat transfer with liquid in the chamber 16 via the inner wall 16A and/or base wall 16B.

The drinkware container body 10 can be removably coupled with a cooling unit 150 via one or more magnets (e.g., permanent magnets) 30 in the container body 10 and one or more magnets 60 in the cooling unit 150. In another implementation the one or more magnets 30 are excluded; for example, the base 15 can be made of a magnetic material (e.g., a metal). In one implementation, the one or more magnets 60 are optionally permanent magnets. In another implementation, the one or more magnets 60 are optionally electromagnets whose polarity can be selectively controlled by a controller of the cooling unit 150 (e.g., via user input via a user interface of the cooling unit 150 or wirelessly via an electronic device such as a smartphone) to allow selective coupling and decoupling of the drinkware container 100 to the cooling unit 50. In another implementation, the one or more magnets 60 are excluded. In one implementation, the cooling unit 150 is integrated into (e.g., a part of) a beverage dispensing machine (e.g., coffee maker, tea maker) and provides a base on which the drinkware container body 10 can be placed prior to or during the dispensing of a beverage from the dispensing machine.

The cooling unit 150 includes a cold side heat sink 70 with a body 72 that includes one or more volumes (e.g., a plurality of volumes) of phase change material (PCM) 74 via which the cold side heat sink 70 can function as a reservoir (e.g., cold storage reservoir). The PCM 74 is disposed in one or more cavities in the body 72. The body 72 can be made of a thermally conductive material (e.g., metal). The cold side heat sink 70 can include the one or more magnets 60. The cooling unit 150 includes one or more thermoelectric modules (e.g., Peltier elements) 26 in thermal contact with the body 72 of the cold storage reservoir 70 and in contact with a heat sink unit 50. The cold side 27 of the one or more thermoelectric modules 26 can be in contact with the body 72 and the hot side 28 of the one or more thermoelectric modules 26 can be in contact with a surface 52 of a heat sink 54 (e.g., hot side heat sink) of the heat sink unit 50. The heat sink 54 can have one or more (e.g., a plurality of) fins. Optionally, the heat sink unit 50 has a fan 56. The heat sink unit 50 can optionally have a connector 58 (e.g., wall outlet connector) for connecting the heat sink unit 50 to a power source. In another implementation, the heat sink unit 50 can instead have one or more batteries (e.g., rechargeable batteries).

With continued reference to FIG. 1A-1B, in operation the cooling unit 150 operates to draw heat out of (e.g., cool) the container body 10. Power is provided to the one or more thermoelectric modules 26 (e.g., via a connection of the connector 58 with a wall outlet, via one or more batteries in the cooling unit 150), which operate to draw heat from (e.g., cool) the cold side heat sink 70. The hot side of the thermoelectric module(s) 26 would transfer heat from the cold side heat sink 70 to the heat sink 54. Optionally, the fan 56 is operable to dissipate heat from the heat sink 54 along with the dissipation of heat via the fins in the heat sink 54. As the one or more thermoelectric modules 26 cools the cold side heat sink 70, the thermoelectric module(s) 26 can also charge the PCM 74 in the cold side heat sink 70. In turn, the cold storage reservoir 70 operates to remove heat from (e.g., cool) the drinkware container 100 placed on (e.g., coupled to) the cold side heat sink 70.

Advantageously, the thermoelectric module(s) 26 charge the PCM 74 in the cold side heat sink 70, thereby allowing the cooling unit 150 to be used to cool a number of drinkware containers 100 (e.g., sequentially) before the PCM 74 would need to be recharged (e.g., by the thermoelectric module(s) 26). In one implementation, the cold side heat sink 70, once the PCM 74 is charged, can allow the cooling unit 150 to cool 2 or more (e.g., 2, 3, 4, 5, 6, etc.) drinkware containers 100 sequentially placed on the cold side heat sink 70 before the PCM 74 needs to be recharged. Charging the PCM 74 as described above, means causing the PCM 74 to transition from one state (e.g., liquid) to a second state (e.g., solid), such as by cooling the PCM 74 below a transition temperature of the PCM 74. Optionally, PCM 74 optionally has a low transition temperature (e.g., transition temperature less than 10 degrees C, less than 5 degrees C, etc.). For example, the PCM 74 can have a transition temperature of approximately 4 degrees Celsius (e.g., approximately 40 degrees Fahrenheit).

As discussed above, the cooling unit 150 can be incorporated into (e.g., be built into, be an accessory that can be added to, removably coupled to) a beverage dispensing unit 200 (e.g., a coffee dispensing machine) and serve as a base on which the drinkware container 100 is placed to receive the beverage from a dispensing nozzle 210 of the beverage dispensing unit 200. In one implementation, the drinkware container 100 is placed on the cooling unit 150 for a period of time (e.g., 30 seconds, 1 minute, 2 minutes, 3 minutes) before the beverage is dispensed from the dispensing nozzle 210, allowing the cooling unit 150 to cool the drinkware container 100 before the beverage is dispensed. In another implementation, the cooling unit 150 cools the drinkware container 100 after the beverage has been dispensed into the drinkware container 100. In still another implementation, the cooling unit 150 cools the drinkware container 100 while the beverage is dispensed from the dispensing nozzle 210 into the drinkware container 100.

The cooling unit 150 reduces the temperature of the beverage dispensed into the drinkware container 100 from a dispensing temperature T0 (e.g., 170F, 180 F, 190 F, etc.) to a cooled drinking temperature T1 (e.g., 40 F, 45 F, 50 F, 55F, etc.). In one implementation, the cooling unit 150 reduces the temperature of the beverage to the cooled drinking temperature T1 in 5 minutes or less (e.g., in 4 minutes or less, in 3 minutes or less, in 2 minutes or less, in 1 minute or less, in 30 seconds or less, in about 15 seconds, etc.). Once the drinkware container 100 is removed from the cooling unit 150, the heat sink 20 in the drinkware container 100 operates to maintain the liquid in the chamber 16 at a cool temperature (e.g., the cooled drinking temperature (T1)) for a prolonged period of time, as discussed above.

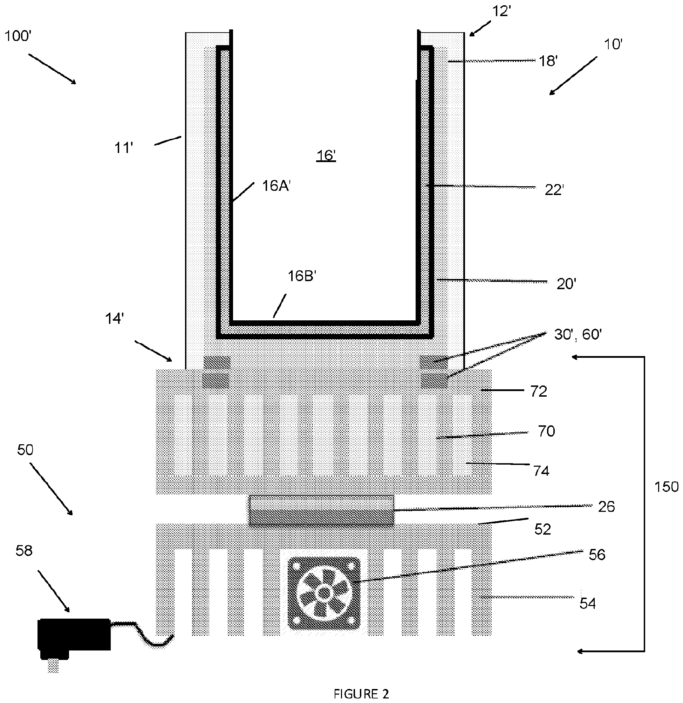

Figure 2 schematically illustrates a drinkware container 100' and cooling unit 150. Some of the features of the drinkware container 100' are similar to features in the drinkware container 100 in FIGS. 1A-1B. The cooling unit 150 in FIG. 1A. Thus, references numerals used to designate the various components of the drinkware container 100 and cooling unit 150 in FIGS. 1A-1B are identical to those used for identifying the corresponding components of the drinkware container 100' and cooling unit 150 in FIG. 2, except that a " ' " is added to the numerical identifiers. Therefore, the structure and description for the various components of the drinkware container 100 and cooling unit 150 in FIGS. 1A-1B is understood to also apply to the corresponding components of the drinkware container 100' and cooling unit 150 in FIG. 2, except as described below.

The drinkware container 100' differs from the drinkware container 100 in that a phase change material (PCM) 22' (e.g., thermal core) is disposed about the chamber 16 (e.g., between the inner wall 16A' and the heat sink 20', so that the PCM 22' operates in series with the heat sink 20'). Optionally, the phase changer material 22' is a solid-to-solid PCM. In another implementation, the phase change material 22' is a solid-to-liquid PCM. Optionally, the phase change material 22' is disposed within a chamber circumferentially about the inner wall 16A'. Optionally, the phase change material 22' is additionally (or alternatively) disposed within a chamber adjacent the base wall 16B'. The phase change material 22' optionally has a low transition temperature (e.g., transition temperature of less than 10 degrees C, less than 5 degrees C, etc.), where the transition temperature is the temperature at which the PCM 22' changes from one state (e.g., liquid) to another state (e.g., solid). For example, the phase change material 22' can have a transition temperature of approximately 4 degrees Celsius (e.g., approximately 40 degrees Fahrenheit).

In use, the cooling unit 150 operates to draw heat out of (e.g., cool) the container body 10'. Power is provided to the one or more thermoelectric modules 26 (e.g., via a connection of the connector 58 with a wall outlet, via one or more batteries in the cooling unit 150), which operate to draw heat from (e.g., cool) the cold side heat sink 70. The hot side of the thermoelectric module(s) 26 would transfer heat from the cold side heat sink 70 to the heat sink 54. Optionally, the fan 56 is operable to dissipate heat from the heat sink 54 along with the dissipation of heat via the fins in the heat sink 54. As the one or more thermoelectric modules 26 cools the cold side heat sink 70, the thermoelectric module(s) 26 can also charge the PCM 74 in the cold side heat sink 70. In turn, the cold side heat sink 70 operates to remove heat from (e.g., cool) the drinkware container 100' placed on (e.g., coupled to) the cold side heat sink 70. Optionally, the cold side heat sink 70 cools the drinkware container 100' so as to charge the PCM 22' (e.g., causing the PCM 22' to transition from one state to another, such as from liquid to solid), allowing the PCM 22' to absorb heat once a heated liquid is poured into the drinkware container 100'.

In one implementation, the container 100', 100‴ can be placed in a freezer or refrigerator (not shown), where the PCM 22', 22‴ is charged (e.g., transitions to a state where it can later absorb heat from a liquid poured into it). The container 100' can then be removed from the freezer or refrigerator and placed on the cooling unit 150 to receive beverage from beverage dispensing unit 200 via dispensing nozzle 210.

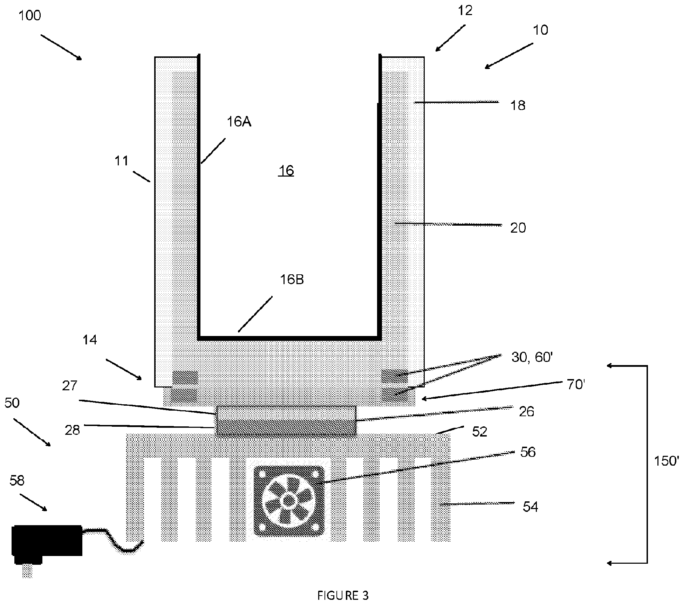

Figure 3 schematically illustrates a drinkware container 100 and an example of a cooling unit 150' that is outside the scope of the present invention. The features of the drinkware container 100 are identical to features in the drinkware container 100 in FIGS. 1A-1B. Some of the features of the cooling unit 150' in FIG. 3 are similar to those in the cooling unit 150 in FIG. 1A. Thus, references numerals used to designate the various components of the drinkware container 100 and cooling unit 150 in FIGS. 1A-1B are identical to those used for identifying the corresponding components of the drinkware container 100 and cooling unit 150' in FIG. 3, except that a " ' " is added to the numerical identifiers. Therefore, the structure and description for the various components of the drinkware container 100 and cooling unit 150 in FIGS. 1A-1B is understood to also apply to the corresponding components of the drinkware container 100 and cooling unit 150' in FIG. 3, except as described below.

As discussed above, the drinkware container 100 in FIG. 3 is identical to the drinkware container 100 in FIGS. 1A-1B. The cooling unit 150' differs from the cooling unit 150 in that the cold side heat sink 70' excludes the PCM 74'. Optionally, the one or more thermoelectric modules 26 (e.g., Peltier elements) can be a plurality of thermoelectric modules 26 (e.g., 2 or more, 4 or more, 6 or more, 10 or more, about 12-15 thermoelectric modules) that can operate to draw heat from the drinkware container 100 to cool a liquid poured into the drinkware container 100 from the dispensing temperature T0 to a cooled drinking temperature T1, as described above in connection with FIG. 1A-1B.

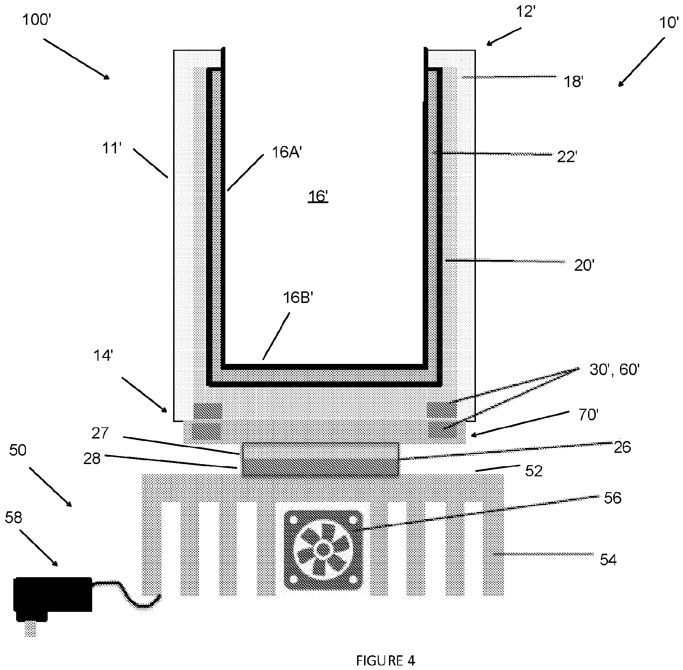

Figure 4 schematically illustrates a drinkware container 100' and an example of a cooling unit 150' that is outside the scope of the present invention. The features of the drinkware container 100' are identical to features in the drinkware container 100' in FIG. 2. The features of the cooling unit 150' in FIG. 4 are identical to those of the cooling unit 150' in FIG. 3. Thus, references numerals used to designate the various components of the drinkware container 100' in FIG. 2 and cooling unit 150' in FIG. 3 are identical to those used for identifying the corresponding components of the drinkware container 100' and cooling unit 150' in FIG. 4. Therefore, the structure and description for the various components of the drinkware container 100' in FIG. 2 and cooling unit 150' in FIG. 3 is understood to also apply to the corresponding components of the drinkware container 100' and cooling unit 150' in FIG. 4.

As discussed above in connection with FIGS. 2 and 3, the one or more thermoelectric modules 26 are powered (e.g., via the connector 58 plugged into a wall outlet, via batteries in the cooling unit 150') to draw heat from the cold side heat sink 70' which in turn draws heat from the drinkware container 100' when it is placed on the cold side heat sink 70'. Optionally, such heat removal can result in charging of the PCM 22' of the drinkware container 100'. The drinkware container 100' can therefore be cooled prior to (or simultaneously with) the dispensing of a beverage into the drinkware container 100'. Optionally, the PCM 22' in the container 100' can be charged by storing the container 100' in a refrigerator or freezer for a period of time (e.g., 5 min, 10 min, 15 min, 20 min, etc.) and then placed on the cooling unit 150' prior to the dispensation of the beverage into the container 100'.

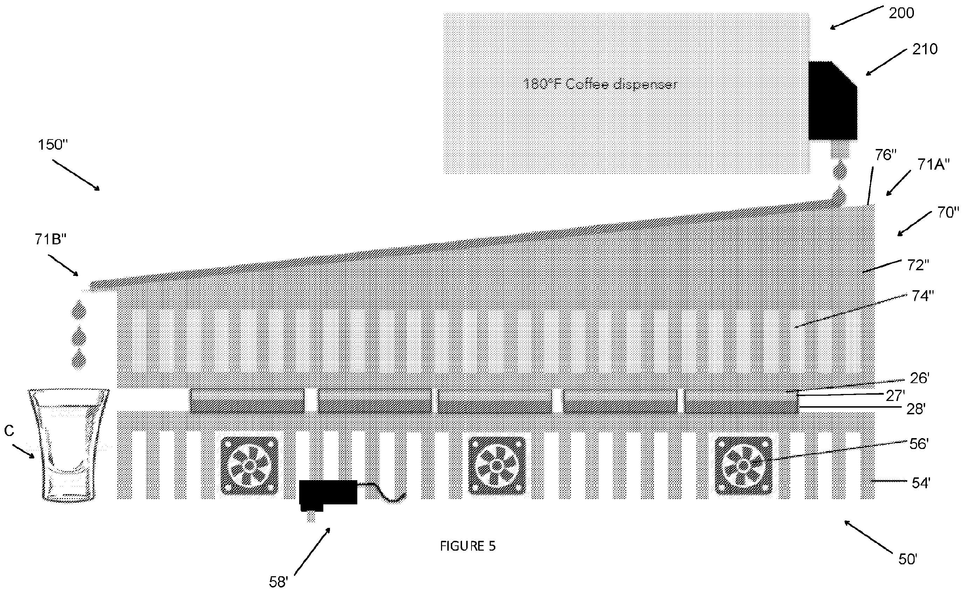

Figure 5 schematically illustrates a cooling unit 150" operable to cool a beverage dispensed from a beverage dispensing unit 200 via a dispensing nozzle 210 and directing the cooled beverage to a drinkware container C. Some of the features of the cooling unit 150" in FIG. 5 are similar to those in the cooling unit 150 in FIG. 1A. Thus, references numerals used to designate the various components of the cooling unit 150 in FIG. 1A are identical to those used for identifying the corresponding components of the cooling unit 150" in FIG. 5, except that a " " " is added to the numerical identifiers. Therefore, the structure and description for the various components of the cooling unit 150 in FIG. 1A is understood to also apply to the corresponding components of the cooling unit 150" in FIG. 5, except as described below.

The cooling unit 150" can include a cold side heat sink 70" with a body 72" that includes one or more volumes (e.g., a plurality of volumes) of phase change material (PCM) 74" via which the cold side heat sink 70" can function as a reservoir (e.g., cold storage reservoir). The PCM 74" can be disposed in one or more cavities in the body 72". The body 72" can be made of a thermally conductive material (e.g., metal).

In the implementation shown in FIG. 5, the body 72" can have an inclined surface or tray 76" that extends from a proximal end 71A" to a distal end 71B" with the surface 76" inclined upward from the distal end 71B" to the proximal end 71A". The dispensing nozzle 210 can dispense liquid (e.g. a beverage) onto the surface 76" (e.g., by dripping the liquid onto the surface 76") at or near the proximal end 71A" and the liquid can flow down the surface 76" toward the distal end 71B", and fall off the distal end 71B" into the drinkware container C. In one implementation, the surface 76" is substantially planar (e.g., flat). In another implementation, the surface 76" has a groove or recessed channel (e.g., one or more grooves or channels) defined therein that extends between (e.g., from) the proximal end 71A" and the distal end 71B", and the liquid dispended from the dispensing nozzle 210 can flow along the groove or recessed channel of the surface 76" to the distal end 71B" where it is dispensed into the drinkware container C. Advantageously, the groove or channel can control the direction of the liquid as it flows down the inclined surface 76", inhibiting the liquid from exiting the surface 76" at a location other than over the drinkware container C. Advantageously, the cooling unit 150" with the surface 76" (with or without a groove or channel) would be easily cleaned after use. For example, the cooling unit 150" can be an accessory that can be removably installed in a beverage dispensing machine that includes the beverage dispensing unit 200, and at least a portion of the cooling unit 150", such as the body 72" can be removed from the beverage dispensing machine as needed and washed or cleaned in other suitable manners.

In another implementation, the path that the dispensed liquid would take on the surface 76" would be other than a straight path between (e.g., from) the proximal end 71A" and the distal end 71B". For example, the path can be curved (e.g., zig-zag, labyrinthine) between the proximal end 71A" and the distal end 71B", which can advantageously allow the liquid to be in contact with the cooled surface 76" for a longer period of time, as compared with a straight path, to achieve the desired dispensing temperature at the distal end 71B". In one implementation, the cooling unit 150" cools the liquid dispensed on the surface 76" for a predetermined period of time (e.g., 30 seconds, 1 minute, 2 minutes, 3 minutes) as it flows along the surface 76" before the beverage is dispensed from the distal end 71B" into the drinkware container C.

In another implementation, the path that the dispensed liquid would take from the proximal end 71A" to the distal end 71B" would run through one or more channels or tubes defined inside the body 72". In this implementation, the liquid would not flow on top of the surface 76" but would instead flow within channels or tubes within the body 72". In one implementation, the path could be a straight path between (e.g., from) the proximal end 71A" and the distal end 71B". In another implementation, the path could be a curved (e.g., zig-zag, labyrinthine) path between (e.g., from) the proximal end 71A" and the distal end 71B".

The cooling unit 150" can include one or more thermoelectric modules (e.g., Peltier elements) 26' (e.g., a plurality of separate modules) in thermal contact with the body 72" of the cold side heat sink 70" and in contact with one or more heat sink units 50' (hot side heat sink units). The cold side 27' of the one or more thermoelectric modules 26' can be in contact with the body 72" and the hot side 28' of the one or more thermoelectric modules 26' can be in contact with a surface 52' of a heat sink 54' (e.g., hot side heat sink) of the heat sink unit 50'. The heat sink 54' can have one or more (e.g., a plurality of) fins. Optionally, the heat sink unit 50' has one or more fans 56' (e.g., a plurality of fans). The heat sink unit 50' can optionally have a connector 58' (e.g., wall outlet connector) for connecting the heat sink unit 50' to a power source. In another implementation, the heat sink unit 50' can instead have one or more batteries (e.g., rechargeable batteries).

With continued reference to FIG. 5, in operation the cooling unit 150" operates to draw heat out of (e.g., cool) the body 72" (e.g., the surface 76"). Power is provided to the one or more thermoelectric modules 26' (e.g., via a connection of the connector 58' with a wall outlet, via one or more batteries in the cooling unit 150"), which operate to draw heat from (e.g., cool) the cold side heat sink 70". The hot side of the thermoelectric module(s) 26' would transfer heat from the cold side heat sink 70" to the heat sink 54'. Optionally, the one or more fans 56' is operable to dissipate heat from the heat sink 54' along with the dissipation of heat via the fins in the heat sink 54'. As the one or more thermoelectric modules 26' cools the cold side heat sink 70", the thermoelectric module(s) 26' can optionally also charge the PCM 74" (e.g., plurality of PCM 74" volumes) in the body 72". In turn, the PCM 74" operates to remove heat from (e.g., cool) the body 72".

Advantageously, the thermoelectric module(s) 26' charge the PCM 74" in the cold side heat sink 70", thereby allowing the cooling unit 150" to be used to cool the flow of dispensed fluid for a prolonged period of time (e.g., for continuous dispensing of liquid) before the PCM 74" would need to be recharged (e.g., by the thermoelectric module(s) 26'). Charging the PCM 74" as described above, means causing the PCM 74" to transition from one state (e.g., liquid) to a second state (e.g., solid), such as by cooling the PCM 74" below a transition temperature of the PCM 74". Optionally, PCM 74" optionally has a low transition temperature (e.g., transition temperature less than 10 degrees C, less than 5 degrees C, etc.). For example, the PCM 74" can have a transition temperature of approximately 4 degrees Celsius (e.g., approximately 40 degrees Fahrenheit).

The cooling unit 150" reduces the temperature of the beverage dispensed into the drinkware container C from a dispensing temperature T0 (e.g., 170F, 180 F, 190 F, etc.) at the dispensing nozzle 210 to a cooled drinking temperature T1 (e.g., 40 F, 45 F, 50 F, 55F, etc.). In one implementation, the cooling unit 150" reduces the temperature of the beverage to the cooled drinking temperature T1 in 5 minutes or less (e.g., in 4 minutes or less, in 3 minutes or less, in 2 minutes or less, in 1 minute or less, in 30 seconds or less, in about 15 seconds, etc.).

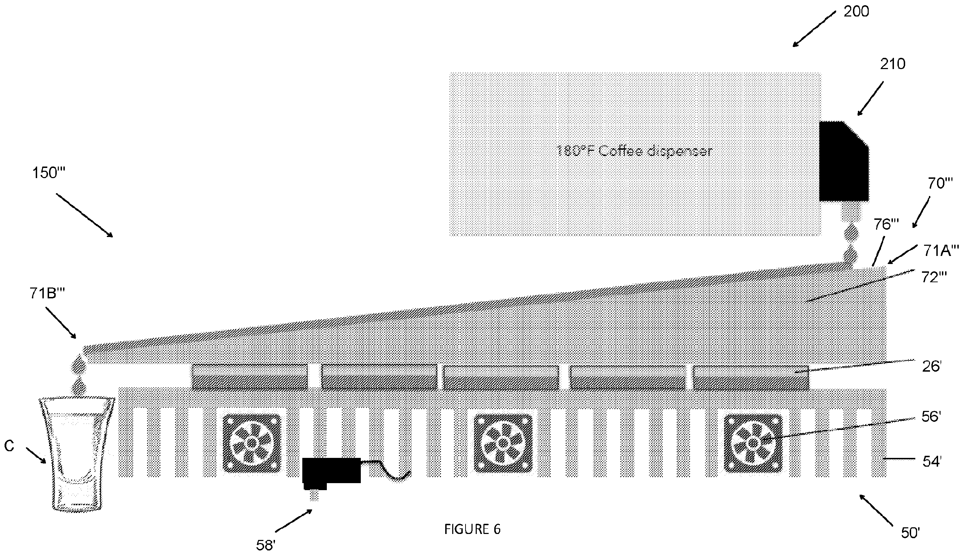

Figure 6 schematically illustrates a cooling unit 150‴ operable to cool a beverage dispensed from a beverage dispensing unit 200 via a dispensing nozzle 210 and directing the cooled beverage to a drinkware container C. Some of the features of the cooling unit 150‴ in FIG. 6 are similar to those in the cooling unit 150" in FIG. 5. Thus, references numerals used to designate the various components of the cooling unit 150" in FIG. 5 are identical to those used for identifying the corresponding components of the cooling unit 150‴ in FIG. 6, except that a " ‴ " is added to the numerical identifiers. Therefore, the structure and description for the various components of the cooling unit 150" in FIG. 5 is understood to also apply to the corresponding components of the cooling unit 150‴ in FIG. 6, except as described below.

The cooling unit 150‴ differs from the cooling unit 150" in that the PCM 74" is excluded from the body 70‴. The one or more thermoelectric modules 26' (e.g., Peltier elements) can be a plurality of thermoelectric modules 26' (e.g., 2 or more, 4 or more, 6 or more, 10 or more, about 12-15 thermoelectric modules) that can operate to draw heat from the body 72‴ (e.g., draw heat from the surface 76‴) to cool the liquid dispensed from the dispensing nozzle 210 onto the surface 76‴ from the dispensing temperature T0 to a cooled drinking temperature T1, as described above in connection with FIG. 5.

In another implementation, the path that the dispensed liquid would take from the proximal end 71A‴ to the distal end 71B‴ would run through one or more channels or tubes defined inside the body 72'". In this implementation, the liquid would not flow on top of the surface 76‴ but would instead flow within channels or tubes within the body 72'". In one implementation, the path could be a straight path between (e.g., from) the proximal end 71A‴ and the distal end 71B'''. In another implementation, the path could be a curved (e.g., zig-zag, labyrinthine) path between (e.g., from) the proximal end 71A‴ and the distal end 71B‴.

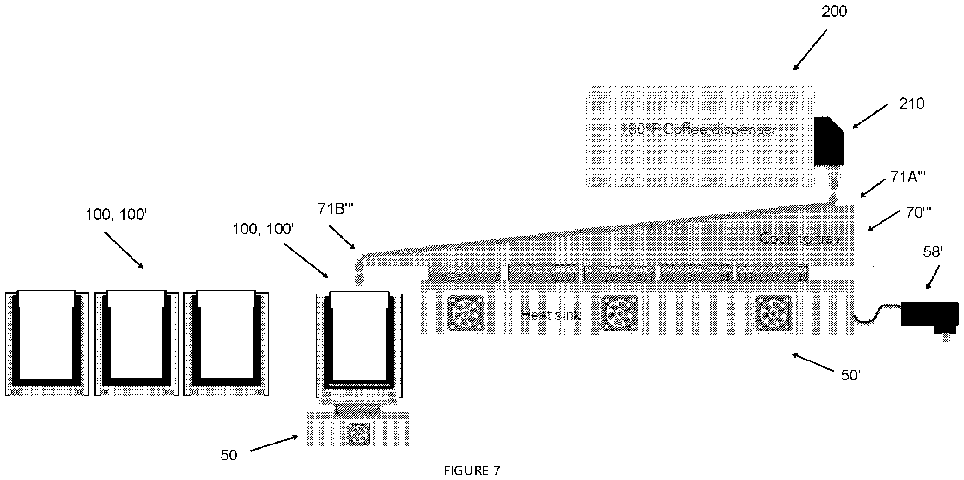

Figure 7 schematically illustrates the cooling unit 150‴ of FIG. 6 at least partially disposed under a beverage dispensing unit 200, and used to dispense a liquid (e.g., cooled coffee, cooled tea) into a drinkware container, such as the drinkware container 100 of FIG. 1A or the drinkware container of FIG. 2. Optionally, the drinkware container 100, 100' is disposed on a cooling unit 150' when the liquid is dispensed from the distal end 71B‴ of the cooling unit 150‴ into the drinkware container 100, 100'. The cooling unit 150' can operate to remove heat (e.g., cool) the drinkware container 100, 100' as discussed above. As discussed previously, in one implementation, the cooling unit 150' can be incorporated into (e.g., be part of, be an accessory coupleable to) a beverage dispensing machine (e.g., coffee machine) that includes the beverage dispensing unit 200 and that includes (e.g., removably receives, as an accessory) the cooling unit 150'".

In one implementation, the drinkware container 100, 100' is placed on the cooling unit 150' (of the beverage dispensing machine). Optionally, the beverage dispensing machine can begin (e.g., automatically begin) the beverage brewing process upon such placement of the drinkware container 100,100' (e.g., via a sensor that senses the placement and communicates a signal to electronics of the beverage dispensing machine to start the brewing process). The cooling unit 150' cools the drinkware container 100, 100'. Where it is the drinkware container 100', the cooling unit 150' charges the PCM 22' in the drinkware container 100'. The brewed beverage is then dispensed (via the nozzle 210) onto the body 72‴ (e.g., cooling tray) at the brewed temperature T0 (e.g., 180 F). As the liquid flows down the body 72‴ toward the distal end 71B‴, the liquid is cooled to a dispensing temperature T1 (e.g., 100 F) and dispensed from the distal end 71B‴ into the drinkware container 100, 100'. The cooled drinkware container 100, 100' further cools the liquid to a desired drinking temperature T2 (e.g., iced coffee or iced tea drinking temperature, such as 40 F, 45F, 50F, etc.). In another implementation, the cooling unit 150‴ can cool the liquid down to the desired drinking temperature T2 before the liquid is dispensed from the distal end 71B'''. The drinkware container 100, 100' can then be removed from the cooling unit 150' (e.g., removed from the beverage dispensing machine). The drinkware container 100, 100' (e.g., the PCM 22') will continue to maintain the beverage in a cooled state for a prolonged period of time (e.g., about 4 hours, about 3 hours, about 2 hours, about 1 hour, about 30 minutes, about 15 minutes).

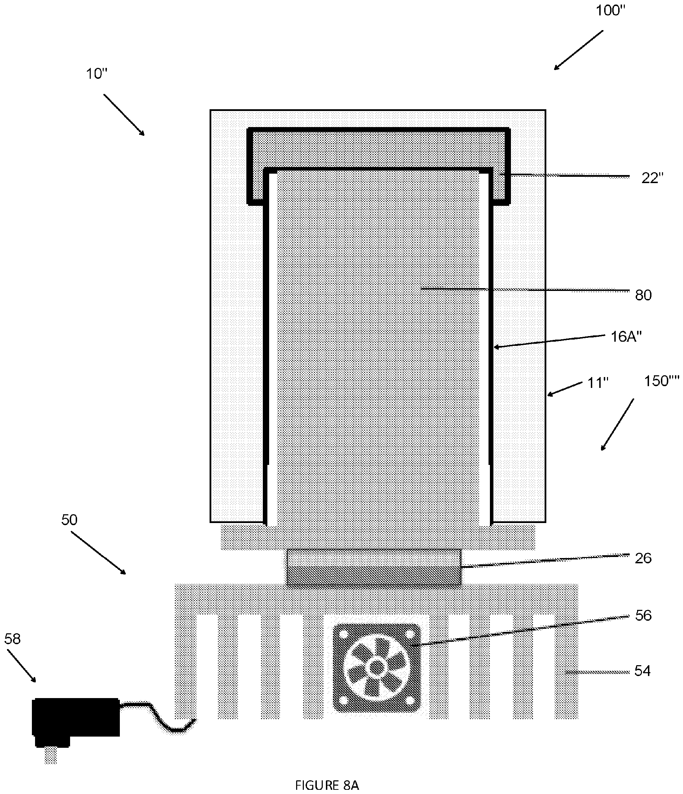

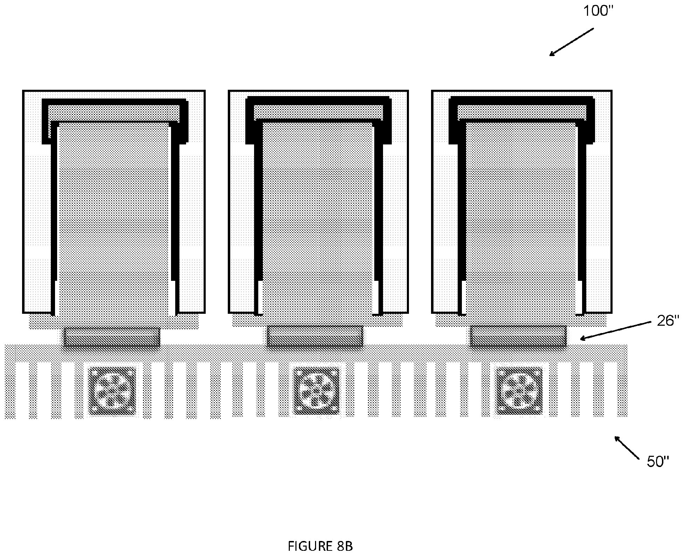

FIGS. 8A-8B schematically shows a cooling unit 150"" (e.g., cooling rack) operable to cool one or more drinkware containers 100". FIG. 8A shows the cooling unit 150"" for cooling a single drinkware container 100" at a time. FIG. 8B shows a cooling unit 150"" for cooling more than one (e.g., two, three, four, etc.) drinkware containers 100" at a time. Certain components of the cooling unit 150ʺʺ are similar to components of the cooling unit 150 in FIG. 1A. Therefore, references numerals used to designate certain components of the cooling unit 150ʺʺ in FIGS. 8A-8B are identical to those used for identifying the corresponding components of the cooling unit 150 in FIG. 1A. Therefore, the structure and description for certain components of the cooling unit 150 in FIG. 1A is understood to also apply to the corresponding components of the cooling unit 150ʺʺ in FIG. 8A-8B, except as described below.

The cooling unit 150ʺʺ has a heat sink 80 (e.g., cold side heat sink) thermally coupled to a cold side 27 of one or more thermoelectric elements 26. The heat sink 80 has one or more volumes (e.g., a plurality of volumes) of phase change material (PCM) (e.g., similar to the PCM volumes 74 in FIG. 2) via which the heat sink 80 can function as a reservoir (e.g., cold storage reservoir), allowing the heat sink 80 to cool more than one drinkware containers 100" sequentially (e.g., one after the other). A hot side 28 of the one or more thermoelectric elements 26 thermally couple to one or more heat sinks 54 (e.g., hot side heat sink) of a heat sink unit 50. Optionally, the cooling unit 150ʺʺ has one or more fans 56 operable to dissipate heat from the one or more heat sinks 54 along with heat dissipation via one or more fins of the one or more heat sinks 54. The cooling unit 150ʺʺ can optionally include a power connector 58 that can be coupled to wall outlet. Alternatively, the cooling unit 150"" can be powered by one or more batteries.

The cold side heat sink 80 can have an elongate body sized to extend into the chamber 16" of the drinkware container 100" when the container 100" is turned upside down and placed over the cold side heat sink 80. The drinkware container 100" has a PCM portion 22" that comes in thermal contact (e.g., direct contact) with at least a portion of (e.g., an end of) the cold side heat sink 80. The cavity in the drinkware container 100" between the inner wall 16A" and the outer wall 11" can in one embodiment be under vacuum. Optionally, the PCM portion 22" is defined adjacent the base wall 16B" of the drinkware container 100" (e.g., only defined adjacent the base wall 16B"). In another implementation, the PCM portion 22" is defined adjacent at least a portion of the inner wall 16A" and the base wall 16B" (e.g., along the entire base wall 16B" and inner wall 16B" as with drinkware container 100', similar to the PCM portion 22' in FIG. 2). Optionally, the drinkware container 100" can have a heat sink (similar to heat sink 20' in container 100') adjacent the PCM 22" (e.g., so that the PCM 22" is disposed between the heat sink and the chamber 16". Optionally, an air gap is defined between an outer surface of the cold side heat sink 80 and the inner wall 16A" of the drinkware container 100".

The cooling unit 150"" is operable to cool the drinkware container 100" while it is disposed (upside down) on the heat sink 80. For example, the one or more thermoelectric elements 26 can draw heat from heat sink 80 and transfer it to the one or more heat sinks 54, where the heat can be dissipated via the fins of the heat sink 54 and/or the operation of the one or more fans 56. The cooled heat sink 80 can cool at least a portion of the drinkware container 100". For example, the cooled heat sink 80 can cool at least the base wall 16B" and inner wall 16A" through conduction via the base wall 16B". Optionally, the cooled heat sink 80 can charge the PCM 22" (e.g., cause it to transition from one state to another state in which it can later absorb heat when a heated liquid is poured into the chamber 16" and cool or maintain the beverage at a cooled drinking temperature, such as 40 F, 45 F, etc.). The PCM 22" advantageously allows the drinkware container 100" to maintain the beverage poured into the drinkware container 100" in a cooled state for a prolonged period of time (e.g., during a commute, while at work, while at a café).

In one implementation, the cooling unit 150"" (e.g., cooling rack) can be an appliance that can sit or be stored on a counter (e.g., kitchen counter, café counter) with one or more drinkware containers 100" disposed on the cooling unit 150"" to keep them in a cooled state ready for use.

Though the cooling unit 150"" is described and illustrated above in connection with the drinkware container 100", one of skill in the art will recognize that the other drinkware containers described herein (e.g., drinkware container 100, 100') can also be used with the cooling unit 150"" and such combinations are contemplated in this disclosure.

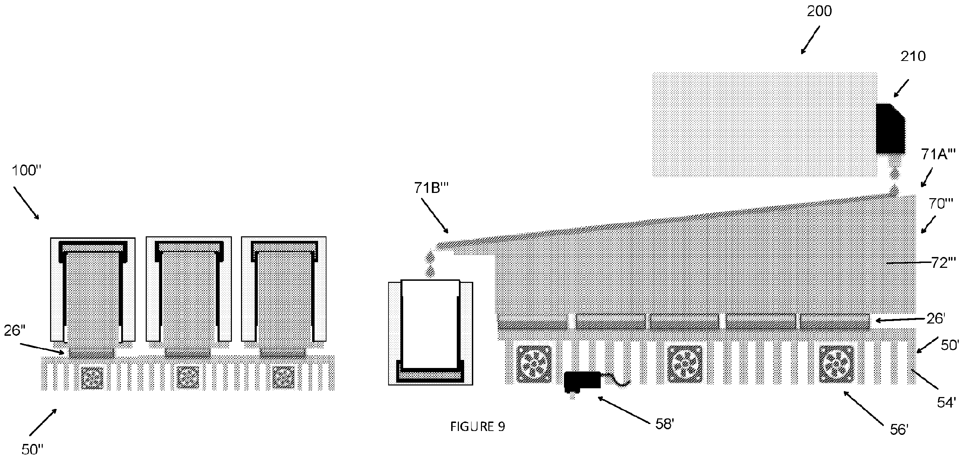

Figure 9 schematically illustrates the cooling unit 150‴ of FIG. 6 at least partially disposed under a beverage dispensing unit 200, and used to dispense a liquid (e.g., cooled coffee, cooled tea) into a drinkware container, such as the drinkware container 100" of FIG. 8A-8B and used in conjunction with the cooling unit 150"" of FIGS. 8A-8B. Optionally, the drinkware container 100" is cooled on the cooling unit 150"" as described above in connection with FIGS. 8A-8B, and then disposed to receive a dispensed liquid from the distal end 71B‴ of the cooling unit 150"'. As discussed previously, the beverage dispensing unit 200 can dispense a beverage via a nozzle 210 onto the body 72" (e.g., cooling tray) of the cooling unit 150" at or near the proximal end 71A" at a first temperature T0 (e.g., beverage brewed temperature) and the liquid can flow down the body 70" to the distal end 71B" and be dispensed at a second temperature T1 (lower than the first temperature T0) into the drinkware container 100". The drinkware container 100" can maintain the liquid at the second temperature T1 or further cool the liquid to a third temperature T2 (lower than the second temperature T1). Optionally, the drinkware container 100" can maintain the liquid in a cooled state (e.g., via the PCM 22") for an extended period of time, as described above.

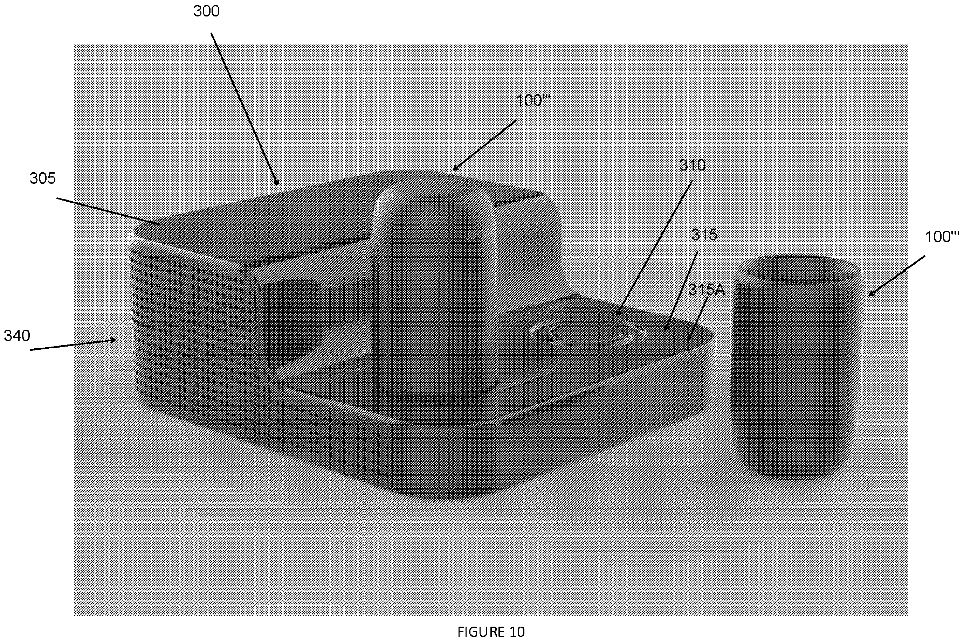

FIGS. 10-11 schematically illustrate a unit 300 (e.g., cooling unit) operable to cool a container 100‴ (e.g., a drinkware container that directly holds a liquid therein, a container that receives and holds another container therein). Some features of the container 100‴ are similar to those of the container 100, 100' in FIGS. 1A-2. Thus, references numerals used to designate the various components of the container 100, 100' in FIGS. 1A-2 are identical to those used for identifying the corresponding components of the container 100‴ in FIGS. 10-11, except that a " ‴ " is added to the numerical identifiers. Therefore, the structure and description for the various components of the container 100, 100' in FIGS. 1A-2 is understood to also apply to the corresponding components of the container 100‴ in FIGS. 10-11, except as described below.

The container 100‴ extends from an opening 13‴ at a proximal end 12‴ to a distal end 14‴ and has an outer wall 11‴ spaced from an inner wall 16A"' to define a cavity 18‴ therebetween. Optionally, the cavity 18"' is under vacuum to insulate the inner and outer walls 16A‴, 11‴ from each other. In another implementation, the cavity 18‴ is filled with air. In another implementation, the cavity 18‴ is at least partially filled with an insulative material (e.g., foam). In one implementation, the container 100‴ (e.g., the inner wall 16A"', base wall 16B‴, outer wall 11‴) is made of the same material (e.g., a metal, such as stainless steel; a plastic material, a ceramic coated metal material). In another implementation, the inner wall 16A‴ and base wall 16B‴ are made of a different material (e.g., stainless steel) than the outer wall 11"' (e.g., plastic, ceramic, ceramic covered metal).

The container 100‴ has a chamber 16‴ defined by the inner wall 16A‴ and a base wall 16B'". The container 100‴ also has a phase change material (PCM) 22‴ disposed (e.g., in one or more layers, in a volume within a channel in the cavity 18"') in thermal communication (e.g., in indirect contact with, in direct contact with) one or both of the inner wall 16A‴ and the base wall 16B'". The PCM 22‴ can optionally be a solid to liquid PCM. In another implementation, the PCM 22‴ can optionally be a solid to solid PCM. In another implementation, the container 100‴ can have a heat sink (similar to heat sink 20' in container 100') disposed in thermal communication with the PCM 22‴ (e.g., so that the PCM 22‴ is interposed between the heat sink and the inner wall 16A‴ and/or base wall 16B‴).

In one implementation, the container 100‴ can receive a liquid beverage (e.g., coffee, tea, water, milk, juice, blended smoothie, beer, wine, distilled spirits) in the chamber 16‴ and maintain the liquid beverage at a cooled temperature T1 (e.g., 40 F, 45 F, 50 F, 55F, etc.) for an extended period of time (e.g., 6 hours or less, 4 hours or less, 2 hours or less, about 1 hour, about 30 minutes, etc.).

In another implementation, the container 100‴ can receive a receptable/container/vessel (not shown, such as bottle, baby bottle) that itself holds a liquid (e.g., coffee, tea, water, milk, breast milk, infant formula, juice, blended smoothie, beer, wine, distilled spirits) in the chamber 16‴ and maintains the liquid in the receptacle/container in a cooled state (e.g., at a cooled temperature of 40 F, 45 F, 50 F, 55F, etc.) for an extended period of time (e.g., 6 hours or less, 4 hours or less, 2 hours or less, about 1 hour, about 30 minutes, etc.). In one implementation, the receptacle/container is held in the chamber 16‴ in a press-fit manner (e.g., in contact with the inner wall 16A‴). In another implementation, a cover (not shown) is attached to the open end 13‴ of the container 100‴ (e.g., via one or more magnets in the cover and/or container 100"', via a threaded coupling between the cover and the container 100''', via a key-slot mechanism in the cover and/or container 100‴) that retains the receptacle/container within the chamber 16"'. In one implementation, the container 100‴ covers at least a portion of the length of the receptacle/container. In another implementation, the container 100‴ covers an entire length of the receptacle/container.

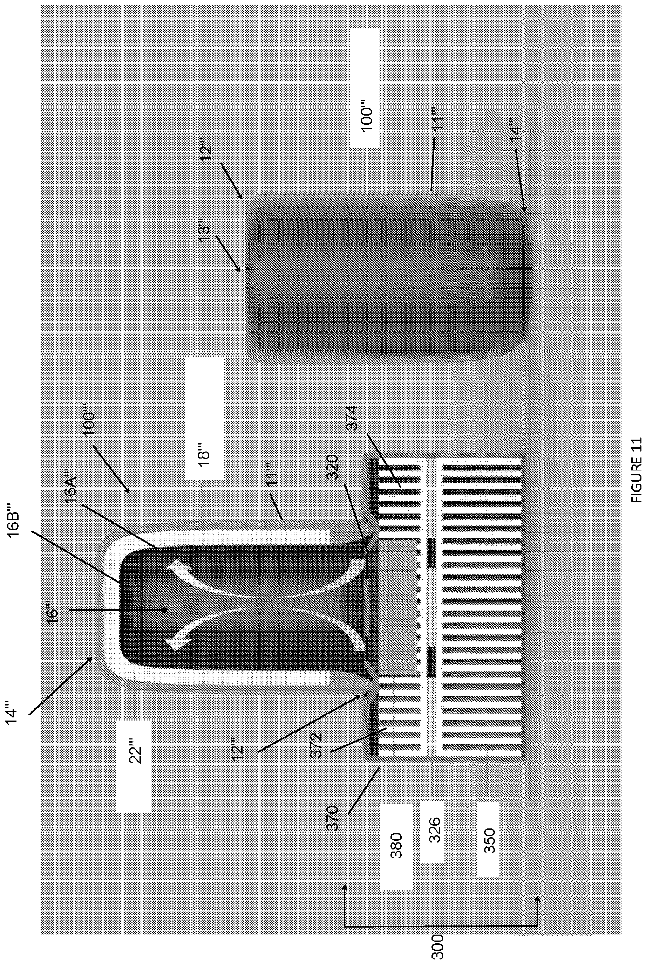

The unit 300 has a body 305 with a platform 315 and one or more docking portions 310. Optionally, the docking portions 310 are recessed relative to a surface 315A of the platform 315. The body can also have one or more openings 340 that allow flow of air into and out of the body 305 as further discussed below. The one or more docking portions 310 can receive the container 100‴ thereon in an upside-down orientation so that the open end 13‴ of the container 100‴ is adjacent (e.g., in contact with) a surface of the docking portion 310. Each docking portion 310 can have one or more openings 320 (see FIG. 11) located thereon so that the openings 320 face the chamber 16"' of the container 100‴ when the container 100‴ is placed upside down on the docking portion 310. In one implementation, the weight of the container 100‴ maintains it in place over the docking portion 310. In another implementation, the container 100‴+ couples to the docking portion 310 via one or more magnets (e.g., located in the container 100‴ and/or the platform 315, such as in the rim of the container 100‴ or under the docking portion 310). In another implementation, the container 100‴ mechanically couples to the docking portion 310 (e.g., in a twist-lock manner via a hook/slot mechanism, or threaded connection, defined in one or both of the container 100‴ and docking portion 310).

The unit 300 has one or more first heat sinks (e.g., cold side heat sinks) 370 disposed in the body 305, one or more second heat sinks (e.g., hot side heat sinks) 350 disposed in the body 305, and one or more thermoelectric elements (TECs) (e.g., Peltier elements) 326 in thermal communication (e.g., direct contact) with, and interposed between, the one of more first heat sinks 370 and one or more second heat sinks 350. The unit 300 also has one or more fans 380 in fluid communication with the one or more first heat sinks 370. In the illustrated embodiment, the one or more fans 380 are disposed within (e.g., integrated in between) a first portion 372 and a second portion 374 of the first heat sink 370 (e.g., integrated into a center portion of the first heat sink 370). However, the one or more fans 380 can be located elsewhere in the body 305 relative to the one or more first heat sinks 370.

In operation, the one or more TECs 326 are operated to draw heat from the one or more first heat sinks 370 and to transfer heat to the one or more second heat sinks 350 to reduce the temperature (e.g., cool) the one or more first heat sinks 370. The one or more fans 380 are operated to flow air past one or more surfaces (e.g., fins) of the one or more first heat sinks 370, thereby cooling said air. In one implementation, the one or more first heat sinks 370 are cooled to a temperature of about 10F-50F and cools the air that flows over it to a temperature of about 10F-50F. The cooled air is directed through the one or more openings 320 into the chamber 16‴ of the container 100'", where it cools the inner wall 16A‴ and/or base wall 16B‴ of the container 100‴. The cooled air also charges the PCM 22‴ (e.g., causing the PCM 22‴ to transition from one state to another, such as from liquid to solid), allowing the PCM 22‴ to absorb heat once a heated liquid or object (e.g., container) is disposed in the chamber 16‴ of the container 100"'. The cooled air can exit the chamber 16‴ via one or more openings (not shown) in the docking portion 310 and exit the body 305 via one or more of the openings 340. In another implementation, the container 100‴ can be placed in the freezer or a cooler (e.g., of a refrigerator) to cool the container 100‴ and charge the PCM 22'".

In another implementation, the unit 300 can be operated to heat air that is injected into the chamber 16‴ of the container 100‴ to heat the inner wall 16A‴ and thereby the PCM 22‴ (e.g. to maintain a beverage, or receptable/container, later placed in the chamber 16‴ in a heated state for an extended period of time). For example, the one or more TECs 326 can be operated to draw heat from the one or more second heat sinks 350 and transfer it to the one or more first heat sinks 370. The one or more fans 380 can then be operated to flow air past one or more surfaces of the one or more first heat sinks 370 to heat the flow of air and the heated air can be injected into the chamber 16‴ via the one of more openings 320.

In some implementations, the cooling unit 150, 150', 150", 150‴, 300 is a standalone unit that is separate from (e.g., not integrated into) a beverage preparation and/or dispensing machine. As discussed above, in other implementations the cooling unit 150, 150', 150", 150'", 300 are optionally incorporated into (e.g., integral with, a part of, coupled to, removably coupled to) a beverage dispending machine (e.g., a coffee brewing and/or machine, a tea brewing and/or machine, an infant formula preparation and/or dispensing machine, a beer or wine dispensing machine, a distilled spirits dispensing machine, a water, such as carbonated water, dispensing machine, smoothie preparation and/or dispending machine, pressed juice preparation and/or dispensing machine, etc.). Optionally, these components can be added to an existing beverage dispensing machine in a modular manner (e.g., incorporating one of the cooling unit 150", 150"', but not the cooling unit 150, 150'; incorporating one of the cooling unit 150, 150' but not the cooling unit 150", 150‴; incorporating one of the cooling units 150, 150' and one of the cooling units 150", 150‴; incorporating the cooling unit 300, etc.). Optionally, the electronics in the beverage dispensing machine can control the operation of one or more components of the cooling unit 150, 150', 150", 150'", 300, such as providing power to and/or operating the one or more thermoelectric modules 26, 26', 326 (e.g., turning them on or off or adjusting power to each), providing power to and/or operating the one or more fans 56, 56', 380 (e.g., turning them on or off or adjusting power to each), providing power to and/or operating the dispensing unit (e.g., dispensing unit 200), such as turning it on or off.

In the embodiments described above, any combination of the cooling unit 150, 150', 150", 150'" and/or 300 advantageously reduces the temperature of a beverage dispensed from a beverage dispensing unit (e.g., beverage dispensing unit 200) from a dispensing temperature T0 (e.g., 50F, 60F, 80F, 100F, 170F, 180 F, 190 F, etc.) to a temperature T1 lower than the dispensing temperature. In one embodiment, the temperature T1 is the desired cooled drinking temperature (e.g., 40 F, 45 F, 50 F, 55F, etc.). In another implementation, the temperature T1 is above the desired cooled drinking temperature and the drinkware container 100, 100', 100", 100‴ further reduces the temperature of the liquid to a second temperature T2 below the temperature T1, where the second temperature T2 is the desired cooled drinking temperature.

In one implementation, any combination of the cooling unit 150, 150', 150", 150'" and/or 300 advantageously reduces the temperature of the beverage from the dispensed temperature T0 to the second temperature T1 in 5 minutes or less (e.g., in 4 minutes or less, in 3 minutes or less, in 2 minutes or less, in 1 minute or less, in 30 seconds or less, in about 15 seconds, in about 10 seconds, in about 5 seconds, etc.). Once the liquid is dispensed into the drinkware container 100, 100', 100", 100"', the heat sink 20, 20' and/or PCM 22', 22", 22‴ in the drinkware container 100, 100', 100", 100‴ operates to maintain the liquid at a cooled drinking temperature for a prolonged period of time, as discussed above.

Though the embodiments above describe systems and methods for delivering a cooled beverage into a drinkware container and for the drinkware container to maintain the liquid in a cooled state, one of skill in the art will recognize that the systems and methods for delivering/storing beverages described above, as well as the containers, can be used to heat or maintain a beverage in a heated state and that such implementations are contemplated in this disclosure. For example, the one or more thermoelectric elements 26, 26', 326 can be operated in a reverse manner to heat a heat sink in contact with the container to heat the container. Such a process can be used to pre-heat containers (e.g., using units 150, 150', 150ʺʺ, 300) before they receive a brewed beverage to prolong the heated state of the beverage that is dispensed into the container. Additionally, the units 150", 150'" can be operated (by operating the one or more thermoelectric elements 26' in a reverse polarity manner) to heat the liquid dispensed from the nozzle 210 before it is delivered to the drinkware container.

While certain embodiments of the inventions have been described, these embodiments have been presented by way of example only and are not intended to limit the scope of the disclosure. Indeed, the novel methods and systems described herein may be embodied in a variety of other forms. For example, though the features disclosed herein are in describe for drinkware containers that have the form factor of a cup or mug, other form factors are contemplated (e.g., beer mugs, wine glasses, water bottles, carafes). Also, the features disclosed are applicable to containers that are not drinkware containers (e.g., dishware, such as plates and bowls, serverware such as serving dishes and hot plates, food storage containers such as tortilla warmers, bread baskets). The scope of the present invention is defined by the appended claims.

## Claims

1. A drinkware system, comprising:
a drinkware container (100) having a container body (10) that extends between a proximal end (12) and a bottom wall (15) at a distal end (14), the drinkware container (100) having a chamber (16) configured to receive and hold a liquid and a heat sink (20) for effecting heat transfer with a liquid in the chamber (16); and
a cooling unit (150) operable to cool the heat sink (20) in the drinkware container (100), the cooling unit (150) comprising
a first heat sink (70) configured to contact the bottom wall (15) of the drinkware container (100) when the drinkware container (100) is placed on the cooling unit (150),
one or more thermoelectric modules (26) in thermal communication with the first heat sink (70), and
a second heat sink (54) in thermal communication with the one or more thermoelectric modules (26) so that the one or more thermoelectric modules (26) are interposed between the first heat sink (70) and the second heat sink (54),
wherein the one or more thermoelectric modules (26) are operable to draw heat from the first heat sink (70) and transfer it to the second heat sink (54) to cool the first heat sink (70), the cooled first heat sink (70) drawing heat from the drinkware container (100) to cool the drinkware container (100);
**characterised in that**:
the cooling unit (150) is configured to removably receive the drinkware container (100) thereon;
the container body (10) has an outer wall (11) and an inner wall (16A) spaced inward of the outer wall (11) to define a cavity (18) therebetween, the inner wall (16A) extending between an opening (13) at the proximal end (12) of the container body (10) and a base wall (16B), the inner wall (16A) and base wall (16B) defining the chamber (16) that is configured to receive and hold a liquid, and the bottom wall (15) spaced below the base wall (16B);
the heat sink (20) of the drinkware container (100) is disposed in the cavity (18), the heat sink (20) in thermal communication with one or both of the inner wall (16A) and the base wall (16B) for effecting heat transfer with a liquid in the chamber (16) via the base wall (16B) and/or the inner wall (16A); and
the first heat sink (70) of the cooling unit (150) comprises a body (72) that includes one or more cavities in which phase change material (PCM) (74) is disposed.

2. The drinkware system of claim 1, wherein the drinkware container (100) is removably coupled to the cooling unit (150) via one or more magnets (30, 60) in one or both of the drinkware container (100) and the cooling unit (150).

3. The drinkware system of any preceding claim, wherein the one or more magnets (60) in the cooling unit (150) are electromagnets operable to allow coupling and decoupling of the drinkware container (100) from the cooling unit (150).

4. The drinkware system of any preceding claim, wherein the one or more thermoelectric modules (26) are operable to charge the PCM (74) to allow the cooling unit (150) to cool a plurality of drinkware containers placed thereon in a sequential manner.

5. The drinkware system of any preceding claim, further comprising one or more fans in the cooling unit operable to dissipate heat from the second heat sink.

6. The drinkware system of any preceding claim, further comprising a power connector (58) connectable with a wall outlet to provide power to the cooling unit (150).

7. The drinkware system of any preceding claim, further comprising a PCM portion (22) in the drinkware container (100), the PCM portion (22) disposed in thermal communication with the heat sink (20) in the drinkware container (100) and one or both of the inner wall (16A) and base wall (16B) of the drinkware container (100), the PCM portion (22) configured to maintain a liquid dispensed into the chamber (16) in a cooled state for an extended period of time.

8. The drinkware system of any preceding claim, further comprising:
a second cooling unit (150) configured to removably receive the drinkware container thereon and operable to cool one or both of the heat sink (200) in the drinkware container (150) and the inner wall (16A) and/or base wall (16B) of the drinkware container (150), the second cooling unit (150) comprising
a third heat sink (70) configured to contact the bottom wall (15) of the drinkware container (100) when the drinkware container (100) is placed on the cooling unit (150),
one or more thermoelectric modules (26) in thermal communication with the first heat sink (70), and
a fourth heat sink (54) in thermal communication with the one or more thermoelectric modules (26) so that the one or more thermoelectric modules (26) are interposed between the third heat sink (70) and the fourth heat sink (54),
wherein the one or more thermoelectric modules (26) are operable to draw heat from the third heat sink (70) and transfer it to the fourth heat sink (54) to cool the third heat sink (70), the cooled third heat sink (70) drawing heat from the drinkware container (100) to cool the drinkware container (100).

9. The drinkware system of claim 8, wherein the drinkware container (100) is removably coupled to the second cooling unit (150) via one or more magnets (30, 60) in one or both of the drinkware container (100) and the second cooling unit (150).

10. The drinkware system of any of claims 8-9, wherein the one or more magnets (30, 60) in the second cooling unit (150) are electromagnets operable to allow coupling and decoupling of the drinkware container (100) from the second cooling unit (150).

11. The drinkware container system of any of claims 8-10, wherein the third heat sink (70) comprises one or more PCM portions (74), the one or more thermoelectric modules (26) operable to charge the one or more PCM portions (74), allowing the second cooling unit (150) to cool a plurality of drinkware containers (100) placed thereon in a sequential manner.

12. The drinkware system of any of claims 8-11, further comprising one or more fans (56) in the second cooling unit (150) operable to dissipate heat from the fourth heat sink (54).

13. The drinkware system of any of claims 8-12, wherein the chamber (16) is configured to receive and hold a liquid dispended from the distal end (12).

## Patentansprüche

1. Getränkesystem, umfassend:
einen Getränkebehälter (100) mit einem Behälterkörper (10), der sich zwischen einem proximalen Ende (12) und einer unteren Wand (15) an einem distalen Ende (14) erstreckt, wobei der Getränkebehälter (100) eine Kammer (16) aufweist, die so konfiguriert ist, dass sie eine Flüssigkeit aufnimmt und hält, und eine Wärmesenke (20) zum Bewirken von Wärmeübertragung mit einer Flüssigkeit in der Kammer (16); und
eine Kühleinheit (150), die betreibbar ist, um die Wärmesenke (20) im Getränkebehälter (100) zu kühlen, wobei die Kühleinheit (150) Folgendes umfasst
eine erste Wärmesenke (70), die so konfiguriert ist, dass sie die untere Wand (15) des Getränkebehälters (100) berührt, wenn der Getränkebehälter (100) auf die Kühleinheit (150) gestellt wird,
ein oder mehrere thermoelektrische Module (26) in thermischer Verbindung mit der ersten Wärmesenke (70), und
eine zweite Wärmesenke (54) in thermischer Verbindung mit dem einen oder den mehreren thermoelektrischen Modulen (26), sodass das eine oder die mehreren thermoelektrischen Module (26) zwischen der ersten Wärmesenke (70) und der zweiten Wärmesenke (54) angeordnet sind,
wobei das eine oder die mehreren thermoelektrischen Module (26) betreibbar sind, um Wärme von der ersten Wärmesenke (70) zu entziehen und sie an die zweite Wärmesenke (54) zu übertragen, um die erste Wärmesenke (70) zu kühlen, wobei die gekühlte erste Wärmesenke (70) dem Getränkebehälter (100) Wärme entzieht, um den Getränkebehälter (100) zu kühlen;
**dadurch gekennzeichnet, dass**:
die Kühleinheit (150) so konfiguriert ist, dass sie den Getränkebehälter (100) abnehmbar aufnimmt;
der Behälterkörper (10) eine Außenwand (11) und eine Innenwand (16A) aufweist, die von der Außenwand (11) nach innen beabstandet ist, um einen Hohlraum (18) dazwischen zu definieren, wobei sich die Innenwand (16A) zwischen einer Öffnung (13) am proximalen Ende (12) des Behälterkörpers (10) und einer Bodenwand (16B) erstreckt, wobei die Innenwand (16A) und die Bodenwand (16B) die Kammer (16) definieren, die so konfiguriert ist, dass sie eine Flüssigkeit aufnimmt und hält, und die untere Wand (15) unterhalb der Bodenwand (16B) beabstandet ist;
die Wärmesenke (20) des Getränkebehälters (100) in dem Hohlraum (18) angeordnet ist, wobei die Wärmesenke (20) in thermischer Verbindung mit einer oder beiden der Innenwand (16A) und der Bodenwand (16B) steht, um eine Wärmeübertragung mit einer Flüssigkeit in der Kammer (16) über die Bodenwand (16B) und/oder die Innenwand (16A) zu bewirken; und
die erste Wärmesenke (70) der Kühleinheit (150) einen Körper (72) umfasst, der einen oder mehrere Hohlräume enthält, in denen ein Phasenwechselmaterial (PCM) (74) angeordnet ist.

2. Getränkesystem nach Anspruch 1, wobei der Getränkebehälter (100) mit der Kühleinheit (150) über einen oder mehrere Magnete (30, 60) in einem oder beiden des Getränkebehälters (100) und der Kühleinheit (150) lösbar verbunden ist.

3. Getränkesystem nach einem vorstehenden Anspruch, wobei es sich bei dem einen oder den mehreren Magneten (60) in der Kühleinheit (150) um Elektromagneten handelt, die betreibbar sind, um das Koppeln und Entkoppeln des Getränkebehälters (100) von der Kühleinheit (150) zu ermöglichen.

4. Getränkesystem nach einem vorstehenden Anspruch, wobei das eine oder die mehreren thermoelektrischen Module (26) betreibbar sind, um das PCM (74) aufzuladen, damit die Kühleinheit (150) eine Vielzahl von darauf gestellten Getränkebehältern nacheinander kühlen kann.

5. Getränkesystem nach einem vorstehenden Anspruch, weiter umfassend einen oder mehrere Ventilatoren in der Kühleinheit, die betreibbar sind, um Wärme von der zweiten Wärmesenke abzuleiten.

6. Getränkesystem nach einem vorstehenden Anspruch, weiter umfassend einen Stromanschluss (58), der mit einer Steckdose verbunden werden kann, um die Kühleinheit (150) mit Strom zu versorgen.

7. Getränkesystem nach einem vorstehenden Anspruch, weiter umfassend einen PCM-Abschnitt (22) in dem Getränkebehälter (100), wobei der PCM-Abschnitt (22) in thermischer Verbindung mit der Wärmesenke (20) in dem Getränkebehälter (100) und einer oder beiden der Innenwand (16A) und der Bodenwand (16B) des Getränkebehälters (100) angeordnet ist, wobei der PCM-Abschnitt (22) so konfiguriert ist, dass er eine in die Kammer (16) abgegebene Flüssigkeit über einen längeren Zeitraum in einem gekühlten Zustand hält.

8. Getränkesystem nach einem vorstehenden Anspruch, weiter umfassend:
eine zweite Kühleinheit (150), die so konfiguriert ist, dass sie den Getränkebehälter abnehmbar aufnimmt und betreibbar ist, um eine oder beide der Wärmesenke (200) in dem Getränkebehälter (150) und der Innenwand (16A) und/oder der Bodenwand (16B) des Getränkebehälters (150) zu kühlen, wobei die zweite Kühleinheit (150) Folgendes umfasst
eine dritte Wärmesenke (70), die so konfiguriert ist, dass sie die untere Wand (15) des Getränkebehälters (100) berührt, wenn der Getränkebehälter (100) auf die Kühleinheit (150) gestellt wird,
ein oder mehrere thermoelektrische Module (26) in thermischer Verbindung mit der ersten Wärmesenke (70), und
eine vierte Wärmesenke (54) in thermischer Verbindung mit dem einen oder den mehreren thermoelektrischen Modulen (26), sodass das eine oder die mehreren thermoelektrischen Module (26) zwischen der dritten Wärmesenke (70) und der vierten Wärmesenke (54) angeordnet sind,
wobei das eine oder die mehreren thermoelektrischen Module (26) betreibbar sind, um der dritten Wärmesenke (70) Wärme zu entziehen und sie an die vierte Wärmesenke (54) zu übertragen, um die dritte Wärmesenke (70) zu kühlen, wobei die gekühlte dritte Wärmesenke (70) dem Getränkebehälter (100) Wärme entzieht, um den Getränkebehälter (100) zu kühlen.

9. Getränkesystem nach Anspruch 8, wobei der Getränkebehälter (100) mit der zweiten Kühleinheit (150) über einen oder mehrere Magnete (30, 60) in einem oder beiden des Getränkebehälters (100) und der zweiten Kühleinheit (150) lösbar verbunden ist.

10. Getränkesystem nach einem der Ansprüche 8-9, wobei der eine oder die mehreren Magnete (30, 60) in der zweiten Kühleinheit (150) Elektromagnete sind, die betreibbar sind, um das Koppeln und Entkoppeln des Getränkebehälters (100) von der zweiten Kühleinheit (150) zu ermöglichen.

11. Getränkebehältersystem nach einem der Ansprüche 8-10, wobei die dritte Wärmesenke (70) einen oder mehrere PCM-Abschnitte (74) umfasst, wobei das eine oder die mehreren thermoelektrischen Module (26) betreibbar sind, um den einen oder die mehreren PCM-Abschnitte (74) aufzuladen, damit die zweite Kühleinheit (150) eine Vielzahl von darauf gestellten Getränkebehältern (100) nacheinander kühlen kann.

12. Getränkesystem nach einem der Ansprüche 8-11, weiter umfassend ein oder mehrere Ventilatoren (56) in der zweiten Kühleinheit (150), die betreibbar sind, um Wärme von der vierten Wärmesenke (54) abzuleiten.

13. Getränkesystem nach einem der Ansprüche 8-12, wobei die Kammer (16) so konfiguriert ist, dass sie eine vom distalen Ende (12) abgegebene Flüssigkeit aufnimmt und hält.

## Revendications

1. Système de récipients à boisson, comprenant :
un récipient à boisson (100) présentant un corps de récipient (10) qui s'étend entre une extrémité proximale (12) et une paroi inférieure (15) au niveau d'une extrémité distale (14), le récipient à boisson (100) présentant une chambre (16) configurée pour recevoir et contenir un liquide et un dissipateur thermique (20) pour effectuer un transfert de chaleur avec un liquide dans la chambre (16) ; et
une unité de refroidissement (150) pouvant fonctionner pour refroidir le dissipateur thermique (20) dans le récipient à boisson (100), l'unité de refroidissement (150) comprenant
un premier dissipateur thermique (70) configuré pour entrer en contact avec la paroi inférieure (15) du récipient à boisson (100) lorsque le récipient à boisson (100) est placé sur l'unité de refroidissement (150),
un ou plusieurs modules thermoélectriques (26) en communication thermique avec le premier dissipateur thermique (70), et
un deuxième dissipateur thermique (54) en communication thermique avec les un ou plusieurs modules thermoélectriques (26) de sorte que les un ou plusieurs modules thermoélectriques (26) soient interposés entre le premier dissipateur thermique (70) et le deuxième dissipateur thermique (54),
dans lequel les un ou plusieurs modules thermoélectriques (26) peuvent fonctionner pour extraire de la chaleur du premier dissipateur thermique (70) et la transférer au deuxième dissipateur thermique (54) pour refroidir le premier dissipateur thermique (70), le premier dissipateur thermique refroidi (70) extrayant de la chaleur du récipient à boisson (100) afin de refroidir le récipient à boisson (100) ;
**caractérisé en ce que** :
l'unité de refroidissement (150) est configurée pour recevoir de manière amovible le récipient à boisson (100) sur celle-ci ;
le corps de récipient (10) présente une paroi extérieure (11) et une paroi intérieure (16A) espacée vers l'intérieur de la paroi extérieure (11) pour définir une cavité (18) entre celles-ci, la paroi intérieure (16A) s'étendant entre une ouverture (13) au niveau de l'extrémité proximale (12) du corps de récipient (10) et une paroi de base (16B), la paroi intérieure (16A) et la paroi de base (16B) définissant la chambre (16) qui est configurée pour recevoir et contenir un liquide, et la paroi inférieure (15) étant espacée en dessous de la paroi de base (16B) ;
le dissipateur thermique (20) du récipient à boisson (100) est disposé dans la cavité (18), le dissipateur thermique (20) étant en communication thermique avec l'une ou les deux parmi la paroi intérieure (16A) et la paroi de base (16B) pour effectuer un transfert de chaleur avec un liquide dans la chambre (16) par l'intermédiaire de la paroi de base (16B) et/ou de la paroi intérieure (16A) ; et
le premier dissipateur thermique (70) de l'unité de refroidissement (150) comprend un corps (72) qui inclut une ou plusieurs cavités dans lesquelles un matériau à changement de phase (PCM) (74) est disposé.

2. Système de récipients à boisson selon la revendication 1, dans lequel le récipient à boisson (100) est couplé de manière amovible à l'unité de refroidissement (150) par l'intermédiaire d'un ou plusieurs aimants (30, 60) dans l'un ou les deux parmi le récipient à boisson (100) et l'unité de refroidissement (150).

3. Système de récipients à boisson selon une quelconque revendication précédente, dans lequel les un ou plusieurs aimants (60) dans l'unité de refroidissement (150) sont des électro-aimants pouvant fonctionner pour permettre l'accouplement et le désaccouplement du récipient à boisson (100) de l'unité de refroidissement (150).

4. Système de récipients à boisson selon une quelconque revendication précédente, dans lequel les un ou plusieurs modules thermoélectriques (26) peuvent fonctionner pour charger le PCM (74) afin de permettre à l'unité de refroidissement (150) de refroidir une pluralité de récipients à boisson placés dessus de manière séquentielle.

5. Système de récipients à boisson selon une quelconque revendication précédente, comprenant en outre un ou plusieurs ventilateurs dans l'unité de refroidissement pouvant fonctionner pour dissiper de la chaleur provenant du deuxième dissipateur thermique.

6. Système de récipients à boisson selon une quelconque revendication précédente, comprenant en outre un connecteur d'alimentation (58) pouvant être connecté à une prise murale pour alimenter l'unité de refroidissement (150).

7. Système de récipients à boisson selon une quelconque revendication précédente, comprenant en outre une partie PCM (22) dans le récipient à boisson (100), la partie PCM (22) étant disposée en communication thermique avec le dissipateur thermique (20) dans le récipient à boisson (100) et avec l'une ou les deux parmi la paroi intérieure (16A) et la paroi de base (16B) du récipient à boisson (100), la partie PCM (22) étant configurée pour maintenir un liquide distribué dans la chambre (16) dans un état refroidi pendant une période prolongée.

8. Système de récipients à boisson selon une quelconque revendication précédente, comprenant en outre :
une seconde unité de refroidissement (150) configurée pour recevoir de manière amovible le récipient à boisson sur celle-ci et pouvant fonctionner pour refroidir l'un ou les deux parmi le dissipateur thermique (200) dans le récipient à boisson (150) et la paroi intérieure (16A) et/ou la paroi de base (16B) du récipient à boisson (150), la seconde unité de refroidissement (150) comprenant
un troisième dissipateur thermique (70) configuré pour entrer en contact avec la paroi inférieure (15) du récipient à boisson (100) lorsque le récipient à boisson (100) est placé sur l'unité de refroidissement (150),
un ou plusieurs modules thermoélectriques (26) en communication thermique avec le premier dissipateur thermique (70), et
un quatrième dissipateur thermique (54) en communication thermique avec les un ou plusieurs modules thermoélectriques (26) de sorte que les un ou plusieurs modules thermoélectriques (26) soient interposés entre le troisième dissipateur thermique (70) et le quatrième dissipateur thermique (54),
dans lequel les un ou plusieurs modules thermoélectriques (26) peuvent fonctionner pour extraire de la chaleur du troisième dissipateur thermique (70) et la transférer au quatrième dissipateur thermique (54) pour refroidir le troisième dissipateur thermique (70), le troisième dissipateur thermique refroidi (70) extrayant de la chaleur du récipient à boisson (100) afin de refroidir le récipient à boisson (100).

9. Système de récipients à boisson selon la revendication 8, dans lequel le récipient à boisson (100) est couplé de manière amovible à la seconde unité de refroidissement (150) par l'intermédiaire d'un ou plusieurs aimants (30, 60) dans l'un ou les deux parmi le récipient à boisson (100) et la seconde unité de refroidissement (150).

10. Système de récipients à boisson selon l'une quelconque des revendications 8-9, dans lequel les un ou plusieurs aimants (30, 60) dans la seconde unité de refroidissement (150) sont des électro-aimants pouvant fonctionner pour permettre l'accouplement et le désaccouplement du récipient à boisson (100) de la seconde unité de refroidissement (150).

11. Système de récipients à boisson selon l'une quelconque des revendications 8-10, dans lequel le troisième dissipateur thermique (70) comprend une ou plusieurs parties PCM (74), les un ou plusieurs modules thermoélectriques (26) pouvant fonctionner pour charger les une ou plusieurs parties PCM (74), permettant à la seconde unité de refroidissement (150) de refroidir une pluralité de récipients à boisson (100) placés dessus de manière séquentielle.

12. Système de récipients à boisson selon l'une quelconque des revendications 8-11, comprenant en outre un ou plusieurs ventilateurs (56) dans la seconde unité de refroidissement (150) pouvant fonctionner pour dissiper de la chaleur provenant du quatrième dissipateur thermique (54).

13. Système de récipients à boisson selon l'une quelconque des revendications 8-12, dans lequel la chambre (16) est configurée pour recevoir et contenir un liquide distribué depuis l'extrémité distale (12).
